# DEMANDE DE BREVET EUROPEEN

(11) **EP 1 864 944 A1**
(43) Date de publication de la demande: **12.12.2007**
(21) Numéro de dépôt: 06300571.4
(22) Date de dépôt: 09.06.2006
(51) Int. Cl.: B67D 5/08, B67D 5/14, B67D 5/33, H04L 12/56, H04L 12/28, G07F 13/02, G07F 7/02

(54) **Dispositif de communication entre une pompe à essence et un véhicule**

(71) Demandeur: Delphi Technologies, Inc., Troy, MI 48007 (US)
(72) Inventeur: Marier, Nicolas, 77410 Fresnes sur Marne (FR); Coudre, Jérôme, 77700 Bailly-Romainvilliers (FR); Le Moullec, Olivier, 93340 Le Raincy (FR); Deroubaix, Nicolas, 94120 Fontenay sous Bois (FR)
(74) Mandataire: Laget, Jean-Loup

(57) **Abrégé**

Dispositif de communication entre un premier ensemble de communication (4) et un deuxième ensemble de communication (5), ledit deuxième ensemble de communication étant disposé dans une pompe à essence (2), caractérisé en ce que ledit premier ensemble de communication comprend un premier module de commande (12), apte à générer une première trame, un premier modulateur, et des premiers moyens d'émission-réception (11), ledit deuxième ensemble de communication comprenant un deuxième module de commande (20), apte à générer une deuxième trame, en réponse à la réception dudit premier signal modulé, un deuxième modulateur, et des deuxièmes moyens d'émission-réception (19), ladite deuxième trame comportant une caractéristique relative à un transfert de carburant entre ladite pompe à essence (2) et un véhicule (1).

## Description

La présente invention a pour objet un dispositif de communication entre un premier ensemble de communication et un deuxième ensemble de communication, le deuxième ensemble de communication étant disposé dans une pompe à essence.

Il existe actuellement plusieurs types de carburants couramment utilisés. Un véhicule utilisant un type de carburant ne peut généralement pas fonctionner avec un autre type de carburant. En outre, l'utilisation d'un carburant non adapté peut entraîner des dommages dans le véhicule. Il est donc important d'éviter que des erreurs puissent se produire lors de la sélection d'un carburant au moment du remplissage du réservoir.

La présente invention a pour but de proposer un dispositif de communication qui évite l'inconvénient précité et qui permette un dialogue entre un premier ensemble de communication associé à un véhicule et un deuxième ensemble de communication disposé dans une pompe à essence.

A cet effet, l'invention a pour objet un dispositif de communication entre un premier ensemble de communication et un deuxième ensemble de communication, ledit deuxième ensemble de communication étant disposé dans une pompe à essence, caractérisé en ce que :
- ledit premier ensemble de communication comprend un premier module de commande, apte à générer une première trame, un premier modulateur apte à moduler un premier signal porteur par ladite première trame, et des premiers moyens d'émission-réception, aptes à émettre ledit premier signal modulé à destination dudit deuxième ensemble de communication,
- ledit deuxième ensemble de communication comprend un deuxième module de commande, apte à générer une deuxième trame, en réponse à la réception dudit premier signal modulé, un deuxième modulateur apte à moduler un deuxième signal porteur par ladite deuxième trame, et des deuxièmes moyens d'émission-réception, aptes à émettre ledit deuxième signal modulé à destination dudit premier ensemble de communication, ladite deuxième trame comportant une caractéristique relative à un transfert de carburant entre ladite pompe à essence et un véhicule.

Avantageusement, lesdits premiers moyens d'émission-réception et lesdits deuxièmes moyens d'émission-réception sont aptes à communiquer par couplage inductif.

Selon un mode de réalisation de l'invention, ledit premier ensemble de communication est disposé dans ledit véhicule.

De préférence, lesdits premiers moyens d'émission-réception sont disposés à proximité d'un orifice débouchant dans le réservoir dudit véhicule, lesdits deuxièmes moyens d'émission-réception étant disposés dans un pistolet de ladite pompe à essence.

Avantageusement, ledit premier module de commande est intégré dans le calculateur principal dudit véhicule.

Selon un mode de réalisation de l'invention, ledit premier ensemble de communication est disposé dans un téléphone mobile appartenant à un usager dudit véhicule.

De préférence, ledit premier signal porteur et ledit deuxième signal porteur sont des signaux de fréquence égale à 125kHz environ.

Avantageusement, ledit premier signal porteur et ledit deuxième signal porteur sont modulés en amplitude.

Selon un mode de réalisation de l'invention, ladite deuxième trame comporte une caractéristique relative au type de carburant sélectionné.

Selon un mode de réalisation de l'invention, ladite deuxième trame comporte une caractéristique relative au volume de carburant délivré audit véhicule.

Selon un mode de réalisation de l'invention, ledit premier ensemble de communication comporte un lecteur de carte à puce, ledit deuxième ensemble de communication comportant un terminal de paiement, ladite deuxième trame comportant une caractéristique relative au prix du carburant délivré audit véhicule, ledit premier ensemble de communication étant apte à générer et à émettre, en réponse à la réception dudit deuxième signal modulé, un troisième signal modulé comportant un code permettant le débit d'un compte bancaire d'un usager dudit véhicule.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
Sur ces dessins :
- la figure 1 est une vue schématique simplifiée montrant un véhicule et une pompe à essence équipés d'un dispositif de communication selon un mode de réalisation de l' invention ;
- la figure 2 est une vue schématique fonctionnelle d'un premier ensemble de communication du dispositif de communication de la figure 1, embarqué dans le véhicule ;
- la figure 3 est est une vue schématique fonctionnelle d'un deuxième ensemble de communication du dispositif de communication de la figure 1, intégré dans la pompe à essence ;
- la figure 4 est un schéma fonctionnel représentant les étapes d'un procédé de vérification du type de carburant sélectionné ;
- la figure 5 est un schéma fonctionnel représentant les étapes d'un procédé de détermination d'un paramètre relatif au véhicule ;
- la figure 6 est un schéma fonctionnel représentant les étapes d'un procédé de paiement depuis le véhicule ;
- la figure 7 est un schéma électrique partiel d'une variante de réalisation du dispositif de communication lors d'un transfert de données du premier ensemble de communication vers le deuxième ensemble de communication ;
- la figure 8 est une vue schématique d'une trame générée par le premier ensemble de communication et du signal modulé correspondant, selon la variante de réalisation ;
- la figure 9 est un schéma électrique partiel du dispositif de communication de la figure 7 lors d'un transfert de données du deuxième ensemble de communication vers le premier ensemble de communication ; et
- la figure 10 est une vue schématique d'une trame générée par le deuxième ensemble de communication et du signal modulé correspondant, selon la variante de réalisation.

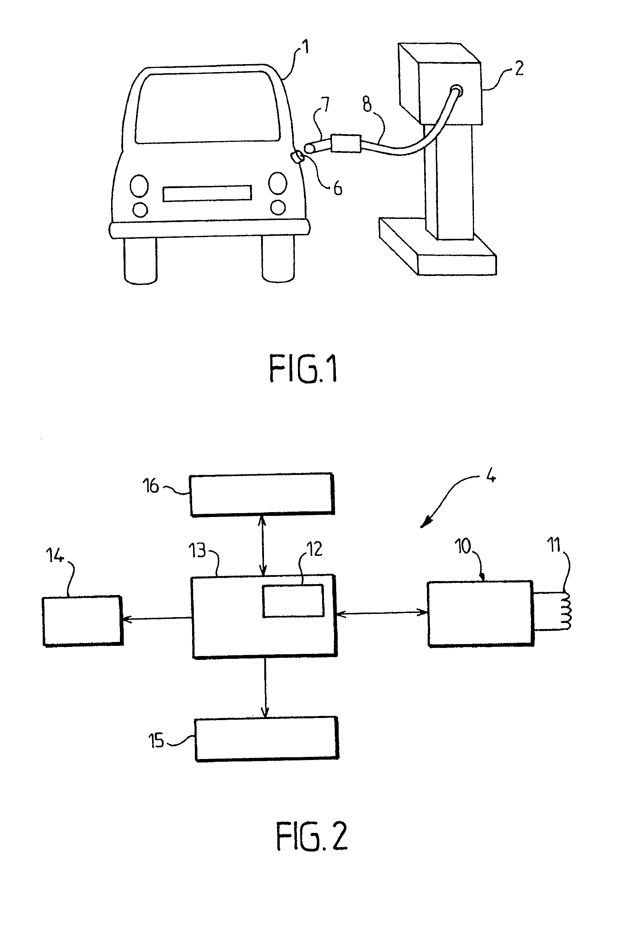

La figure 1 montre l'arrière d'un véhicule 1 et une pompe à essence 2.

Le véhicule 1 comporte un orifice 6 débouchant dans un réservoir d'essence (non représenté) du véhicule 1. L'orifice 6 est apte à être fermé par un bouchon d'essence (non représenté). La pompe à essence 2 comporte un pistolet 7, apte à être inséré dans l'orifice 6 pour permettre le remplissage du réservoir du véhicule 1. Le pistolet 7 est connecté à un tuyau d'alimentation 8, le tuyau d'alimentation 8 étant connecté à une réserve de carburant de la pompe 2.

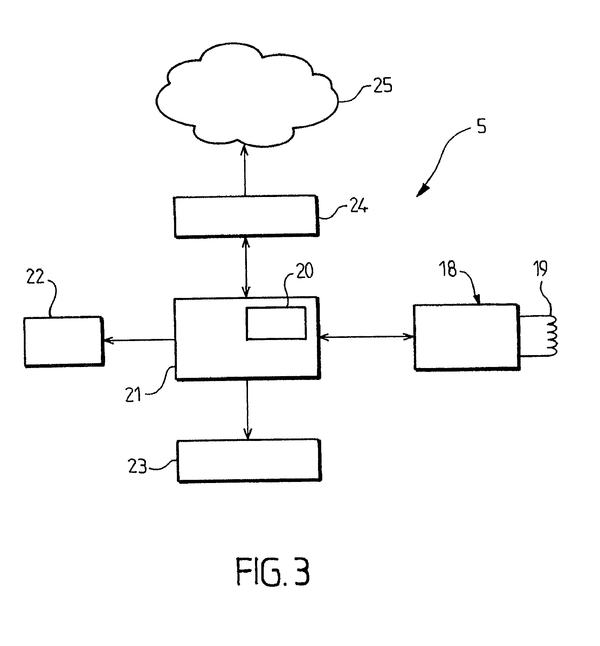

Un dispositif de communication comporte un premier ensemble de communication 4 (figure 2) embarqué dans le véhicule 1 et un deuxième ensemble de communication 5 (figure 3) intégré dans la pompe 2.

En se référant à la figure 2, le premier ensemble de communication 4 comporte un transpondeur 10. Le transpondeur 10 comprend un circuit résonant 11, représenté schématiquement par une bobine formant une antenne magnétique. Le transpondeur 10 comprend un modulateur, destiné à moduler une trame reçue depuis un module de commande 12 du premier ensemble de communication 4, et un démodulateur, destiné à démoduler un signal reçu depuis le circuit résonant 11. Le module de commande 12 est par exemple intégré dans un calculateur principal 13 du véhicule, qui permet de gérer l'ensemble des dispositifs électroniques du véhicule 1.

Le module de commande 12 est connecté à un moyen d'affichage 14, par exemple un afficheur à cristaux liquides disposé sur le tableau de bord du véhicule 1. L'afficheur 14 peut notamment afficher des données transmises par la pompe à essence 2, d'une manière qui sera décrite en détail plus loin, par exemple le type de carburant sélectionné, le volume de carburant délivré et/ou le prix du plein.

Le module de commande 12 est également connecté à un capteur de jauge à carburant 15, qui permet de déterminer le niveau de carburant dans le réservoir, d'une manière connue en soi.

Le module de commande 12 est également connecté à un lecteur de carte à puce 16, de type classique, dont la fonction sera décrite en détail plus loin.

Le premier ensemble de communication 4 et tous ses composants sont alimentés par un circuit d'alimentation (non représenté) raccordé, par exemple, au module de commande 12.

En se référant à la figure 3, le deuxième ensemble de communication 5 comporte un transpondeur 18. Le transpondeur 18 du deuxième ensemble 5 est par exemple similaire au transpondeur 10 du premier ensemble. Le transpondeur 18 comprend notamment un circuit résonant 19, représenté schématiquement sous la forme d'une bobine formant une antenne magnétique. Le circuit résonant 19 est par exemple disposé dans le pistolet 7 et le circuit résonant 11 est par exemple disposé à proximité de l'orifice 6. Lorsque les circuits résonants 11 et 19 se trouvent à proximité l'un de l'autre, par exemple à moins de 25mm, un courant induit peut être engendré, par couplage inductif, par l'un des circuits résonant 11 ou 19, aux bornes de l'autre circuit résonant 19 ou 11, respectivement. Les transpondeurs 10 et 18 du véhicule 1 et de la pompe à essence 2 sont ainsi aptes à communiquer lorsqu'une opération de remplissage du véhicule 1 par la pompe à essence 2 est en cours. De cette manière, la communication entre les ensembles de communication 4 et 5 peut utiliser des signaux de courte portée, ce qui d'une part est économique, et d'autre part permet d'éviter les interférences avec d'autres dispositifs. On notera que la portée d'un système à transpondeur, c'est-à-dire la distance maximale entre les circuits résonants permettant le couplage inductif, dépend, notamment, de la taille de l'antenne du transpondeur, de la fréquence d'excitation de la bobine du circuit résonnant engendrant le champ magnétique, de l'intensité de cette excitation, et de la consommation en puissance du transpondeur.

Le transpondeur 18 est connecté à un module de commande 20, qui est par exemple intégré dans une carte électronique principale 21 de gestion de la pompe 2. La carte électronique 21 est destinée à gérer l'ensemble des fonctionnalités de la pompe 2.

Le module de commande 20 est connecté à un afficheur à segment 22 destiné à afficher, par exemple, le volume de carburant distribué par la pompe à essence 2 au véhicule 1 et le prix correspondant.

Le module de commande 20 est également connecté à un moteur de pompe électrique 23 qui commande la distribution de carburant depuis la pompe à essence 2 vers le réservoir du véhicule 1.

Le module de commande 20 est également connecté à un terminal de paiement 24 permettant à un usager de payer le carburant à l'aide d'une carte bancaire. Le terminal de paiement 24 est couplé à un réseau de téléphone fixe ou mobile 25. Un tel système de paiement est connu et ne sera pas décrit en détail.

Le deuxième ensemble de communication 5 et tous ses composants sont alimentés par un circuit d'alimentation (non représenté) raccordé, par exemple, au module de commande 20.

### Vérification du type de carburant sélectionné

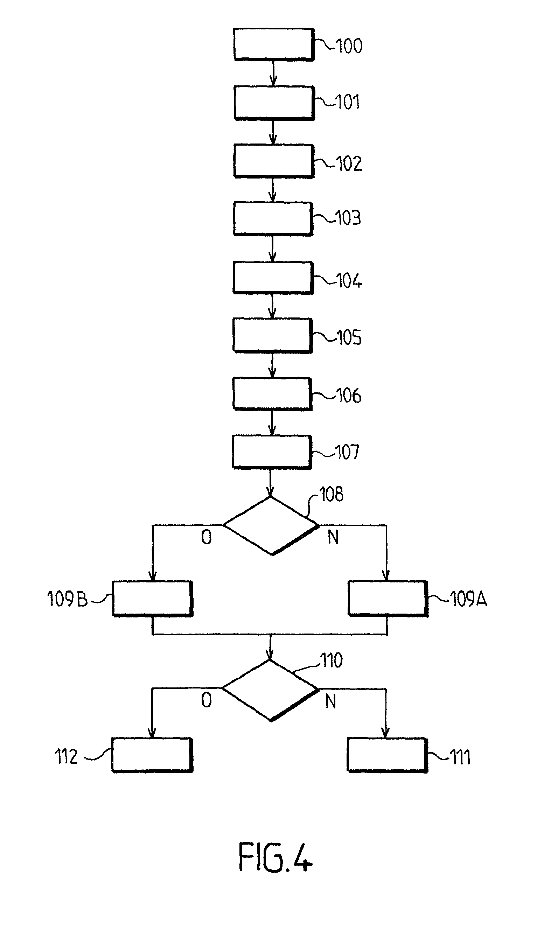

En se référant à la figure 4, on va maintenant décrire les étapes d'un procédé de vérification du type de carburant sélectionné. Le procédé est par exemple initialisé automatiquement lorsqu'un usager introduit le pistolet 7 de la pompe à essence 2 dans l'orifice 6, c'est-à-dire lorsque les circuits résonants 11 et 19 sont en position de couplage inductif.

A l'étape 100, le module de commande 12 génère une trame d'interrogation. Le codage utilisé est par exemple un code Manchester. La trame est transmise au transpondeur 10.

A l'étape 101, le modulateur génère un signal d'interrogation modulé en modulant un signal porteur par la trame d'interrogation générée à l'étape 100. Le signal porteur présente par exemple une fréquence sensiblement égale à 125kHz. La modulation utilisée est par exemple une modulation d'amplitude. La modulation d'amplitude a notamment pour avantage une faible consommation énergétique et est simple à réaliser. A ce moment, le signal d'interrogation modulé alimente le circuit résonant 11 qui émet le signal d'interrogation modulé, sous la forme d'un champ magnétique, à destination du transpondeur 18.

A l'étape 102, le circuit résonant 19 du transpondeur 18 capte le champ magnétique engendré par le circuit résonant 11. Les circuits résonants 11 et 19 sont de préférence accordés sur la fréquence porteuse. Cet accord a pour objet de maximiser la diffusion d'énergie vers le transpondeur 18. Le champ magnétique capté est transmis au démodulateur du transpondeur 18.

A l'étape 103, le démodulateur du transpondeur 18 démodule le signal d'interrogation modulé. Le signal d'interrogation démodulé, c'est-à-dire la trame d'interrogation, est transmise au module de commande 20.

A l'étape 104, le module de commande 20 génère une trame de réponse contenant le type de carburant sélectionné. La trame de réponse est transmise au transpondeur 18.

A l'étape 105, le modulateur du transpondeur 18 génère un signal de réponse modulé en modulant un signal porteur, qui a par exemple la même fréquence que le signal porteur utilisé à l'étape 101, par la trame de réponse. Le signal de réponse modulé alimente le circuit résonant 19 qui émet le signal de réponse modulé, sous la forme d'un champ magnétique, à destination du transpondeur 10.

A l'étape 106, le circuit résonant 11 du transpondeur 10 capte le champ magnétique engendré par le circuit résonant 19. Le champ magnétique capté est transmis au démodulateur du transpondeur 10.

A l'étape 107, le démodulateur du transpondeur 10 démodule le signal de réponse modulé. Le signal de réponse démodulé, c'est-à-dire la trame de réponse, est transmise au module de commande 12.

A l'étape 108, le module de commande 12 teste une condition de carburant adapté. La condition est vérifiée lorsque le carburant sélectionné correspond au carburant utilisé normalement par le véhicule 1. On suppose ici que l'usager n'a pas sélectionné le bon carburant. Lorsque la condition n'est pas vérifiée le procédé passe à l'étape 109A.

A l'étape 109A, le module de commande 12 génère une trame de carburant non adapté et la transmet au module de commande 20. Les étapes permettant la transmission d'une trame depuis le module de commande 12 vers le module de commande 20, c'est-à-dire les étapes de modulation, d'émission, de réception et de démodulation, sont similaires à ce qui a été décrit précédemment et ne sont pas décrites en détail dans la suite du texte. Simultanément, le module de commande 12 peut commander l'affichage sur l'afficheur 14 du premier ensemble de communication 4 d'un message indiquant à l'usager que le carburant sélectionné n'est pas adapté au véhicule.

A l'étape 110, le module de commande 20 teste une condition d'accord pour distribution de carburant. La condition est vérifiée lorsque la trame reçue est une trame de carburant adaptée. Ici, la trame est une trame de carburant non adapté, donc la condition n'est pas vérifiée. Lorsque la condition n'est pas vérifiée, le procédé passe à l'étape 111.

A l'étape 111, le module de commande 20 peut par exemple empêcher le démarrage de la distribution de carburant au véhicule 1.

Lorsque l'usager retire le pistolet 7 de la pompe 2 de l'orifice 6 et introduit dans l'orifice 6 un autre pistolet 7 de la pompe 2, correspondant à un autre carburant disponible à partir de la pompe 2, le procédé s'initialise de nouveau.

Les étapes 100 à 107 sont similaires à ce qui a été décrit précédemment.

A l'étape 108, on suppose que la condition de carburant adapté est vérifiée. Lorsque la condition est vérifiée, le procédé passe à l'étape 109B.

A l'étape 109B, le module de commande 12 génère une trame de carburant adapté et la transmet au module de commande 20.

A l'étape 110, le module de commande 20 teste une condition d'accord pour distribution de carburant. La condition étant vérifiée, le procédé passe à l'étape 112.

A l'étape 112, le module de commande 20 commande la distribution de carburant au véhicule 1.

Ce procédé permet ainsi d'empêcher une mauvaise sélection de carburant, celle-ci pouvant notamment endommager le moteur.

### Détermination d'un paramètre relatif au véhicule

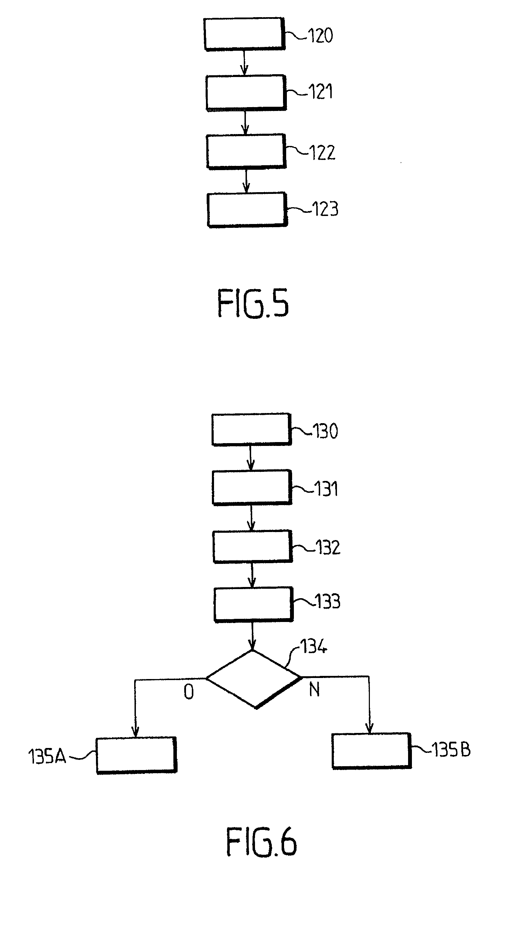

En se référant à la figure 5, on va maintenant décrire les étapes d'un procédé de calcul d'un paramètre relatif au véhicule. Ce procédé est par exemple effectué à la fin du remplissage du réservoir du véhicule 1, avant que l'usager ne retire le pistolet 7 de l'orifice 6.

A l'étape 120, le module de commande 20 génère une trame de fin de distribution. La trame est transmise au module de commande 12.

A l'étape 121, le module de commande 12 génère une trame d'interrogation concernant par exemple le volume de carburant délivré ou le prix correspondant. La trame est transmise au module de commande 20.

A l'étape 122, le module de commande 12 génère une trame de réponse. La trame de réponse est transmise au module de commande 20.

A l'étape 123, le module de commande 12 mémorise la trame de réponse reçue à l'étape 122 et l'utilise pour calculer la valeur d'un paramètre relatif au véhicule, par exemple le prix moyen d'un plein, la somme des prix des derniers pleins, ou la consommation du véhicule.

### Paiement depuis le véhicule

En se référant à la figure 6, on va maintenant décrire les étapes d'un procédé de paiement du carburant depuis le véhicule 1. Ce procédé est par exemple effectué à la fin du remplissage du réservoir du véhicule 1, avant que l'usager ne retire le pistolet 7 de l'orifice 6.

A l'étape 130, le module de commande 20 génère une requête de paiement. La requête de paiement est transmise au module de commande 12.

A l'étape 131, le module de commande 12 commande l'affichage sur l'afficheur 14 d'un message indiquant à l'usager le prix du plein et lui demandant d'introduire sa carte dans le lecteur de carte à puce 16. Lorsque la carte a été introduite dans le lecteur 16, le procédé passe à l'étape 132.

A l'étape 132, le module de commande 12 génère une trame de paiement contenant un code de la carte à puce. La trame de paiement est transmise au module de commande 20.

A l'étape 133, la trame de paiement est transmise du module de commande 20 au terminal de paiement 24.

A l'étape 134, le terminal de paiement 24 teste une condition de paiement accepté. La condition est vérifiée lorsque le débit du compte bancaire correspondant à la carte est possible. Pour tester cette condition, le terminal de paiement 24 interroge un serveur par le biais d'un réseau téléphonique 25. Cette étape est similaire aux opérations qui sont effectuées pour vérifier qu'un paiement est accepté à partir d'un lecteur de carte de type classique. Lorsque la condition est vérifiée, le procédé passe à l'étape 135A. Sinon, le procédé passe à l'étape 135B.

A l'étape 135A, le terminal 24 commande le prélèvement d'une somme correspondant au prix du plein sur le compte associé à la carte. Le module de commande 20 génère une trame de paiement accepté. La trame est transmise au module de commande 12.

A l'étape 135B, le module de commande 20 génère une trame de paiement non accepté. La trame est transmise au module de commande 12. Lors de la réception d'une trame de paiement non accepté, le module de commande 12 peut par exemple commander l'affichage sur l'afficheur 14 d'un message indiquant à l'usager que le paiement a été refusé.

D'autres variantes sont possibles. Par exemple, le procédé de vérification du type de carburant sélectionné peut comporter des étapes 98 et 99, effectuées avant l'étape 100.

A l'étape 98, le module de commande 20 génère une trame de détection d'un premier ensemble de communication 4 et l'émet à destination du véhicule 1.

A ce moment, si le véhicule 1 est équipé d'un premier ensemble de communication 4, le module de commande 12 génère une trame de réponse et la transmet au module de commande 20.

A l'étape 99, le module de commande 20 teste une condition de réception d'une réponse. Si la condition n'est pas vérifiée, c'est-à-dire si le module de commande 20 n'a pas reçu un signal de réponse provenant du module de commande 12, alors le procédé passe à l'étape 112, c'est-à-dire à la commande de distribution de carburant. Sinon le procédé passe à l'étape 100. Les étapes 98 et 99 permettent de détecter la présence ou non d'un ensemble de communication 4 dans le véhicule 1. De cette manière, la pompe 2, équipée d'un ensemble de communication 3, peut fonctionner avec un véhicule 1 équipé ou non d'un dispositif de communication 4.

L'intégration du premier ensemble de communication 4 dans le véhicule 1 présente l'avantage de permettre la détermination d'un paramètre relatif au véhicule, par exemple la consommation journalière du véhicule ou la durée entre deux pleins, par le biais de capteurs et de dispositifs également intégrés dans le véhicule. Néanmoins, le premier ensemble de communication peut être intégré dans un téléphone mobile au lieu d'être embarqué dans le véhicule. Dans ce cas, le premier ensemble de communication comprend un écran d'affichage, qui est celui du téléphone mobile, un lecteur de carte à puce, un module de commande, et des moyens d'émission-réception qui remplacent le transpondeur 10. La pompe 2 est dans ce cas équipée de moyens d'émission-réception adaptés pour communiquer avec les moyens d'émission-réception du téléphone mobile.

De manière générale, l'invention a pour objet de permettre une liaison bi-directionnelle entre une pompe à essence et un véhicule. Les moyens d'émission-réception peuvent être quelconques, par exemple radio-fréquence ou optique.

Dans le cas d'un système de pompe à essence automatique, dans lequel l'usager n'a pas a sélectionner le carburant, le premier ensemble de communication peut transmettre au deuxième ensemble de communication le type de carburant ainsi que le volume de carburant souhaité avant le début du remplissage du réservoir, ce qui simplifie l'opération de remplissage pour l'usager.

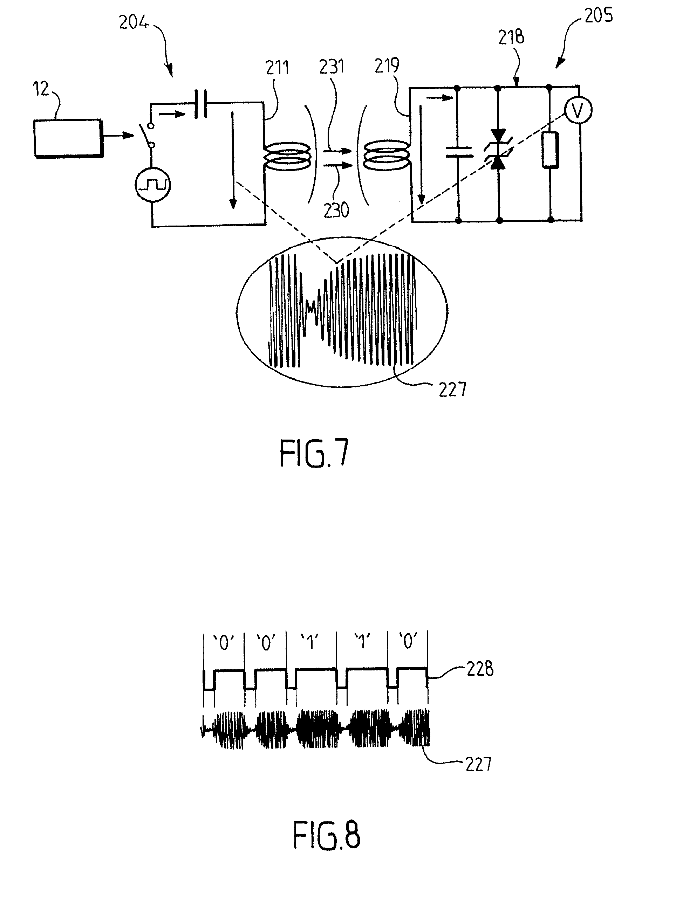

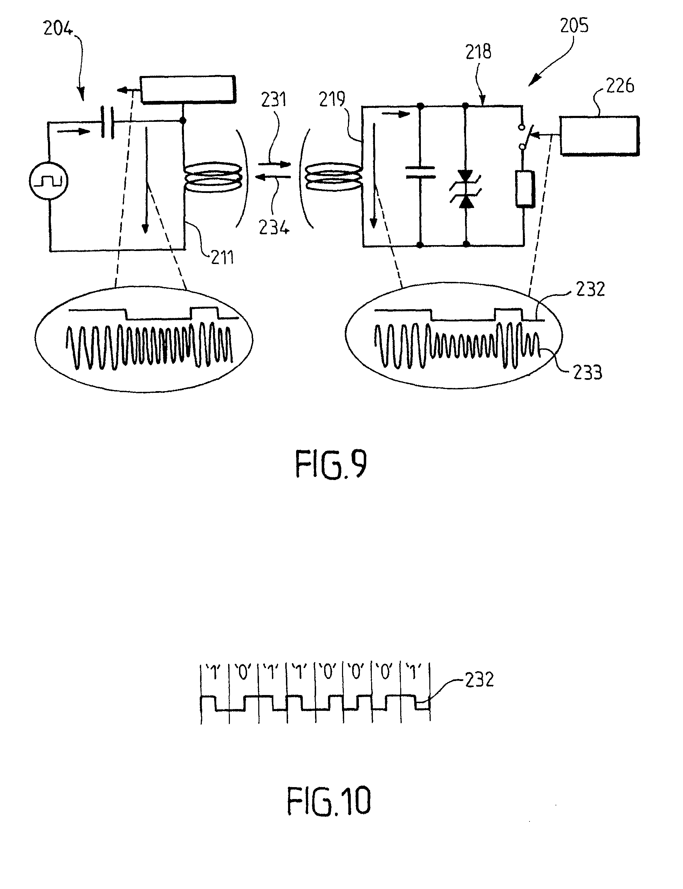

Les figure 7 à 10 représentent une variante de réalisation. Dans cette variante, le deuxième ensemble de communication 205, intégré dans la pompe 2, n'est pas alimenté par un circuit d'alimentation de la pompe 2. Dans ce cas, le transpondeur 218 du deuxième dispositif de communication 205 est passif Le transpondeur 218 comporte un circuit résonant 219 et une mémoire 226 (figure 9) dans laquelle sont mémorisées des données, par exemple relatives au type de carburant.

Dans cette variante, le circuit résonant 211 du premier ensemble de communication 204 est alimenté par un signal porteur modulé 227 (figures 7 et 8) issu d'une trame 228. La modulation consiste à alimenter le circuit résonant 211 par le signal porteur pendant une durée prédéfinie correspondant à une valeur. Par exemple une première durée prédéfinie correspond à un « 0 » et une deuxième durée prédéfinie correspond à un « 1 », tel que cela est représenté sur la figure 8. Ce mode de transmission permet de transmettre suffisamment d'énergie au deuxième ensemble de communication 205 pour lui permettre de répondre. En d'autres termes, le premier ensemble de communication 204 transmet simultanément des données, symbolisées par la flèche 230 (figure 7), et de l'énergie, symbolisée par la flèche 231 (figure 7), au deuxième ensemble de communication 205.

En réponse à la réception du signal porteur modulé 227, le deuxième ensemble de communication 205 génère une trame de réponse 232. Le codage utilisé est par exemple un code Manchester. La trame de réponse 232 module le signal reçu du premier ensemble de communication 204. Le deuxième ensemble de communication 205 transmet alors un signal modulé 233 au premier ensemble de communication 204. En d'autres termes, le premier ensemble de communication 204 transmet de l'énergie, symbolisée par la flèche 231 (figure 9), au deuxième ensemble de communication 205, et, simultanément, le deuxième ensemble de communication 205 transmet des données, symbolisées par la flèche 234.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de communication entre un premier ensemble de communication (4) et un deuxième ensemble de communication (5), ledit deuxième ensemble de communication (5) étant disposé dans une pompe à essence (2),
**caractérisé en ce que** :
- ledit premier ensemble de communication (4) comprend un premier module de commande (12), apte à générer une première trame, un premier modulateur apte à moduler un premier signal porteur par ladite première trame, et des premiers moyens d'émission-réception (11), aptes à émettre ledit premier signal modulé à destination dudit deuxième ensemble de communication (5),
- ledit deuxième ensemble de communication (5) comprend un deuxième module de commande (20), apte à générer une deuxième trame, en réponse à la réception dudit premier signal modulé, un deuxième modulateur apte à moduler un deuxième signal porteur par ladite deuxième trame, et des deuxièmes moyens d'émission-réception (19), aptes à émettre ledit deuxième signal modulé à destination dudit premier ensemble de communication (4), ladite deuxième trame comportant une caractéristique relative à un transfert de carburant entre ladite pompe à essence (2) et un véhicule (1).

2. Dispositif de communication selon la revendication 1, **caractérisé en ce que** lesdits premiers moyens d'émission-réception (11) et lesdits deuxièmes moyens d'émission-réception (19) sont aptes à communiquer par couplage inductif.

3. Dispositif de communication selon la revendication 1 ou 2, **caractérisé en ce que** ledit premier ensemble de communication (4) est disposé dans ledit véhicule (1).

4. Dispositif de communication selon la revendication 3, **caractérisé en ce que** lesdits premiers moyens d'émission-réception (11) sont disposés à proximité d'un orifice (6) débouchant dans le réservoir dudit véhicule (1), lesdits deuxièmes moyens d'émission-réception (19) étant disposés dans un pistolet (7) de ladite pompe à essence (2).

5. Dispositif de communication selon la revendication 2 ou 3, **caractérisé en ce que** ledit premier module de commande (12) est intégré dans le calculateur principal (13) dudit véhicule (1).

6. Dispositif de communication selon la revendication 1 ou 2, **caractérisé en ce que** ledit premier ensemble de communication (4) est disposé dans un téléphone mobile appartenant à un usager dudit véhicule (1).

7. Dispositif de communication selon l'une quelconque des revendications 1 à 6, **caractérisé en ce que** ledit premier signal porteur et ledit deuxième signal porteur sont des signaux de fréquence égale à 125kHz environ.

8. Dispositif de communication selon l'une quelconque des revendications 1 à 7, **caractérisé en ce que** ledit premier signal porteur et ledit deuxième signal porteur sont modulés en amplitude.

9. Dispositif de communication selon l'une quelconque des revendications 1 à 8, **caractérisé en ce que** ladite deuxième trame comporte une caractéristique relative au type de carburant sélectionné.

10. Dispositif de communication selon l'une quelconque des revendications 1 à 9, **caractérisé en ce que** ladite deuxième trame comporte une caractéristique relative au volume de carburant délivré audit véhicule.

11. Dispositif de communication selon l'une quelconque des revendications 1 à 10, **caractérisé en ce que** ledit premier ensemble de communication (4) comporte un lecteur de carte à puce (16), ledit deuxième ensemble de communication (5) comportant un terminal de paiement (24), ladite deuxième trame comportant une caractéristique relative au prix du carburant délivré audit véhicule, ledit premier ensemble de communication (4) étant apte à générer et à émettre, en réponse à la réception dudit deuxième signal modulé, un troisième signal modulé comportant un code permettant le débit d'un compte bancaire d'un usager dudit véhicule.
